# EUROPÄISCHE PATENTSCHRIFT

(11) **EP 3 079 907 B1**
(45) Veröffentlichungstag und Bekanntmachung des Hinweises auf die Patenterteilung: **07.03.2018**
(21) Anmeldenummer: 14816149.0
(22) Anmeldetag: 05.12.2014
(51) Int. Cl.: B32B 27/36, C08J 5/18, C08L 67/04

(54) **POLYMERMISCHUNG FÜR BARRIEREFOLIE**
POLYMER COMPOSITION FOR BARRIER FILM
MÉLANGE DE POLYMÈRES POUR FILM BARRIÈRE

(30) Priorität: 10.12.2013 EP 13196444
(43) Veröffentlichungstag der Anmeldung: 19.10.2016
(73) Patentinhaber: BASF SE, 67056 Ludwigshafen am Rhein (DE)
(72) Erfinder: YAMAMOTO, Motonori, 68199 Mannheim (DE); GRÜNER, Simon Alexander, 67482 Altdorf (DE); LEHENMEIER, Maximilian, 69117 Heidelberg (DE)
(74) Vertreter: BASF IP Association
(86) Internationale Anmeldenummer: PCT/EP2014/076760
(87) Internationale Veröffentlichungsnummer: WO 2015/086463

(56) Entgegenhaltungen:
- EP-A1- 1 616 908
- EP-A1- 2 255 951
- US-A- 4 565 851

## Beschreibung

Die vorliegende Erfindung betrifft eine biologisch abbaubare Polyestermischung enthaltend:
i. 55 bis 90 Gew.-%, bezogen auf die Komponenten i und ii, einer Polyglykolsäure (PGA) und
ii. 10 bis 45% Gew.-%, bezogen auf die Komponenten i und ii, mindestens eines biologisch abbaubaren Polyesters gebildet aus aliphatischen oder aliphatischen und aromatischen Dicarbonsäuren und aliphatischen Diolen, wobei die Komponente ii gebildet ist aus:
   - 40 bis 100 mol%, bezogen auf die Gesamtmenge an Dicarbonsäure, mindestens einer aliphatischen C₄-C₁₈-Dicarbonsäure oder Dicarbonsäurederivats,
   - 0-60 mol%, bezogen auf die Gesamtmenge an Dicarbonsäure, Terephtalatsäure oder eines Terephtalatsäurederivats und
   - 100 mol%, bezogen auf die Gesamtmenge von Dicarbonsäure, 1,4-Butendiol oder 1,3-Propandiol.

Weiterhin betrifft die Erfindung Einschicht- oder Mehrschichtfolien enthaltend diese Polymermischungen und die Verwendung der Folien zur Verpackung von Nahrungsmitteln.

Aus EP 1616908 und US 4 565 851 sind Polyestermischungen aus Polyglykolsäure und aromatischen Polyestern wie Polyethylenterephthalat, die biologisch nicht abbaubar sind und sich auch hinsichtlich ihrer Eigenschaften von den vorliegenden aliphatisch-aromatischen Polyestern unterscheiden, bekannt.

Aus der JP 2012040688 sind laminierte Mehrschichtfolien bekannt, die eine Außenschicht aus Polymilchsäure, eine Haftungsschicht aus einem aliphatisch-aromatischen Polyester und eine Schicht aus Polyglykolsäure aufweisen. Diese Folien weisen interessante Gasbarriere-Eigenschaften auf, können jedoch hinsichtlich ihrer mechanischen Eigenschaften nicht immer voll überzeugen. Einschichtige Folien aus Polyglykolsäure genügen beispielsweise hinsichtlich ihrer Hydrolysebeständigkeit nicht den Anforderungen, die an Verpackungsfolien gestellt werden.

Aus EP 2255951 sind Polyestermischungen aus Polyglykolsäure und geringen Anteilen (5 Gew.-%) Polymilchsäure bekannt, die hinsichtlich ihrer Hydrolysebeständigkeit und Wasserpermeabilität nicht völlig zufrieden stellen können.

Ziel der vorliegenden Erfindung war es demnach Polymermischungen bereitzustellen, die sich durch Extrusion oder Coextrusion zu Folien mit guten Barriereeigenschaften und verbesserten mechanischen Eigenschaften verarbeiten lassen.

Überraschenderweise wird dies durch die erfindungsgemäßen Polymermischungen enthaltend:
i. 55 bis 90 Gew.-%, bezogen auf die Komponenten i und ii, einer Polyglykolsäure (PGA)
   und
ii. 10 bis 45% Gew.-%, bezogen auf die Komponenten i und ii, eines biologisch abbaubaren Polyesters gebildet aus aliphatischen oder aliphatischen und aromatischen Dicarbonsäuren und aliphatischen Diolen, wobei die Komponente ii gebildet ist aus:
   - 40 bis 100 mol%, bezogen auf die Gesamtmenge an Dicarbonsäure, mindestens einer aliphatischen C₄-C₁₈-Dicarbonsäure oder Dicarbonsäurederivats,
   - 0-60 mol%, bezogen auf die Gesamtmenge an Dicarbonsäure, Terephtalatsäure oder eines Terephtalatsäurederivats und
   - 100 mol%, bezogen auf die Gesamtmenge von Dicarbonsäure, 1,4-Butendiol oder 1,3-Propandiol.
erreicht.

Diese lassen sich durch Extrusion oder Coextrusion prozessfähig zu Folien mit sehr guten Barriereeigenschaften insbesondere einer hohen Wasserdampf- und Sauerstoffbarriere verarbeiten. Zudem weisen diese Folien verbesserte mechanische Eigenschaften auf.

Im Folgenden wird die Erfindung näher beschrieben.

Unter Polyglycolsäure werden Homopolymer aus Glycolid oder Glykolsäure oder auch Copolyester verstanden, die neben Glycolid oder Glykolsäure bis zu 30% Comonomer, wie Milchsäure, Laktid, Ethylenoxalat oder ε-Caprolacton enthalten. Genauso fallen darunter dieselben Polyester und Copolyester unabhängig davon, ob die Monomere als Lactone oder als aliphatische Hydroxycarbonsäuren eingesetzt werden. Weiter werden unter Polyglykolsäure verzweigte und lineare Polyester verstanden, wobei lineare bevorzugt sind. Insbesondere sind unter Polyglykolsäure Produkte wie Kuredux® (Fa. Kureha) zu verstehen.

Beispielhaft sind die Copolymere: Ethylenoxalat, Laktid, Milchsäure, β-Propiolacton, β-Butyrolacton, Pivalolacton, γ-Butyrolacton, δ-Valerolacton, ε-Caprolacton, Trimethylencarbonat, 1,3-Dioxan, Dioxanon, ε-Caprolactam, 3-Hydroxypropionsäure, 4-Hydroxybutansäure und 6-Hydroxyhexansäure genannt. Dabei können die Hydroxycarbonsäuren oder deren esterbildenden Derivate, einzeln oder als Gemisch aus zwei oder mehr davon eingesetzt werden.

Die Polyglycolsäuren weisen in der Regel ein zahlenmittleres Molekulargewicht (Mn) im Bereich von 5000 bis 500000, insbesondere im Bereich von 10000 bis 250000 g/mol, bevorzugt im Bereich von 15000 bis 100000 g/mol, ein gewichtmittleres Molekulargewicht (Mw) von 30000 bis 1000000, vorzugsweise 60000 bis 500000 g/mol und ein Mw/Mn-Verhältnis von 1 bis 6, vorzugsweise 1 bis 4 auf. Der Schmelzpunkt liegt im Bereich von 200 bis 250, bevorzugt im Bereich von 210 bis 240°C.
Der MVR (Schmelzvolumenrate) nach EN ISO 1133 (240°C, 2,16 kg Gewicht) der Polyglykolsäure liegt im Allgemeinen bei 0,1 bis 70, bevorzugt bei 0,8 bis 70 und insbesondere bei 1 bis 60 cm³/10 min.
Für die erfindungsgemäßen Polymermischungen eignen sich als Komponente ii biologisch abbaubare Polyester auf Basis von aliphatischen oder aliphatischen und aromatischen Dicarbonsäuren und aliphatischen Dihydroxyverbindungen geeignet. Letztere werden auch als teilaromatische Polyester bezeichnet. Gemeinsam ist diesen Polyestern, dass sie biologisch abbaubar nach DIN EN 13432 sind. Selbstverständlich sind auch Mischungen mehrerer solcher Polyester geeignet.
Unter teilaromatischen (aliphatisch-aromatischen) Polyestern sollen erfindungsgemäß auch Polyesterderivate verstanden werden, die bis zu 10 mol% andere Funktionen als Esterfunktionen enthalten wie Polyetherester, Polyesteramide oder Polyetheresteramide und Polyesterurethane. Zu den geeigneten teilaromatischen Polyestern gehören lineare nicht kettenverlängerte Polyester (WO 92/09654). Bevorzugt werden kettenverlängerte und/oder verzweigte teilaromatische Polyester. Letztere sind aus den eingangs genannten Schriften, WO 96/15173 bis 15176, 21689 bis 21692, 25446, 25448 oder der WO 98/12242, bekannt, auf die ausdrücklich Bezug genommen wird. Mischungen unterschiedlicher teilaromatischer Polyester kommen ebenso in Betracht. Interessante jüngere Entwicklungen basieren auf nachwachsenden Rohstoffen (siehe WO-A 2006/097353, WO-A 2006/097354 sowie WO2010/034689). Insbesondere sind unter teilaromatischen Polyestern Produkte wie ecoflex® (BASF SE) und Eastar® Bio, Origo-Bi® (Novamont) zu verstehen.

Zu den erfindungsgemässen aliphatischen und besonders bevorzugten teilaromatischen Polyestern zählen Polyester, die als wesentliche Komponenten enthalten:
A1) 40 bis 100 mol-%, insbesondere bevorzugt 40 bis 60 mol-%, bezogen auf die Komponenten A1) bis A2), einer aliphatischen C₄ - C₁₈ Dicarbonsäure oder Mischungen davon, vorzugsweise wie im Folgenden ausgeführt: Bernsteinsäure, Azelainsäure, Sebacinsäure und Brassylsäure,
A2) 0 bis 60 mol-%, insbesondere bevorzugt 40 bis 60 mol-%, bezogen auf die Komponenten A1) bis A2), einer aromatischen Dicarbonsäure oder Mischungen davon, wie im Folgenden ausgeführt: Terephthalsäure,
   B) 100 mol-%, bezogen auf die Komponenten A1) bis A2), einer Diolkomponente wie im Folgenden ausgeführt: 1,4-Butandiol und 1,3- Propandiol; und
   C) 0,05 bis 1,5 Gew.-% bezogen auf die Komponenten A1) bis A2) und B, einer Verbindung oder mehrerer Verbindungen ausgewählt aus der Gruppe bestehend aus:
C1) einer Verbindung mit mindestens drei zur Esterbildung befähigten Gruppen, vorzugsweise wie im Folgenden ausgeführt: Trimethylolpropan, Pentaerythrit und insbesondere Glycerin,
C2) eines di- oder polyfunktionellen Isocyanates, vorzugsweise Hexamethylendiisocyanat,
C3) eines di- oder polyfunktionellen Epoxids.

Als aliphatische Säuren und die entsprechenden Derivate A1 kommen im Allgemeinen solche mit 4 bis 18 Kohlenstoffatomen, vorzugsweise 4 bis 10 Kohlenstoffatomen, in Betracht. Sie können sowohl linear als auch verzweigt sein. Prinzipiell können jedoch auch Dicarbonsäuren mit einer größeren Anzahl an Kohlenstoffatomen, beispielsweise mit bis zu 30 Kohlenstoffatomen, eingesetzt werden.

Beispielhaft zu nennen sind: Bernsteinsäure, Glutarsäure, 2-Methylglutarsäure, 3-Methylglutarsäure, α-Ketoglutarsäure, Adipinsäure, Pimelinsäure, Azelainsäure, Sebacinsäure, Brassylsäure, Fumarsäure, 2,2-Dimethylglutarsäure, Suberinsäure (Korksäure), Diglykolsäure, Oxalessigsäure, Glutaminsäure, Asparaginsäure, Itaconsäure und Maleinsäure. Dabei können die Dicarbonsäuren oder deren esterbildenden Derivate, einzeln oder als Gemisch aus zwei oder mehr davon eingesetzt werden.

Bevorzugt werden Bernsteinsäure, Adipinsäure, Azelainsäure, Sebacinsäure, Brassylsäure oder deren jeweilige esterbildenden Derivate oder Mischungen davon eingesetzt. Besonders bevorzugt werden Bernsteinsäure, Adipinsäure oder Sebacinsäure oder deren jeweilige esterbildenden Derivate oder Mischungen davon eingesetzt. Bernsteinsäure, Azelainsäure, Sebacinsäure und Brassylsäure haben zudem den Vorteil, dass sie aus nachwachsenden Rohstoffen zugänglich sind.

Insbesondere bevorzugt sind die folgenden aliphatisch-aromatischen Polyester: Polybutylenadipatterephthalat (PBAT), Polybutylensebacatterephthalat (PBSeT) oder Polybutylensuccinatterephthalat (PBST) und ganz besonders bevorzugt Polybutylenadipatterephthalat (PBAT) und Polybutylensebacatterephthalat (PBSeT).

Die aromatischen Dicarbonsäuren oder deren esterbildende Derivate A2 können einzeln oder als Gemisch aus zwei oder mehr davon eingesetzt werden. Erfindungsgemäss wird Terephthalsäure oder deren esterbildende Derivate wie Dimethylterephthalat, verwendet. Geeignete Alkandiole sind 1,4-butandiol und 1,3- Propandiol. Letztere haben zudem den Vorteil, dass sie als nachwachsender Rohstoff zugänglich sind. Es können auch Mischungen unterschiedlicher Alkandiole verwendet werden.

In der Regel werden 0,01 bis 2 Gew-%, vorzugsweise 0,1 bis 1,0 Gew.-% und insbesondere bevorzugt 0,1 bis 0,3 Gew.-%, bezogen auf das Gesamtgewicht des Polyesters, eines Verzweigers (C1) und/oder 0,1 bis 1,0 Gew.- %, bezogen auf das Gesamtgewicht des Polyesters, eines Kettenverlängerers (C2 oder C3) eingesetzt. Der Verzweiger ist bevorzugt ausgewählt aus der Gruppe bestehend aus: einem polyfunktionellen Isocyanat, Isocyanurat, Oxazolin, Epoxid, Peroxid, Carbonsäureanhydrid, einem mindestens trifunktionellen Alkohol oder einer mindestens trifunktionellen Carbonsäure. Als Kettenverlängerer kommen insbesondere difunktionelle Isocyanate, Isocyanurate, Oxazoline, Carbonsäureanhydrid oder Epoxide in Frage.

Besonders bevorzugte Verzweiger haben drei bis sechs funktionelle Gruppen. Beispielhaft seien genannt: Weinsäure, Zitronensäure, Äpfelsäure; Trimethylolpropan, Trimethylolethan; Pentaerythrit; Polyethertriole und Glycerin, Trimesinsäure, Trimellitsäure, Trimellitsäureanhydrid, Pyromellitsäure und Pyromellitsäuredianhydrid. Bevorzugt sind Polyole wie Trimethylolpropan, Pentaerythrit und insbesondere Glycerin. Mittels der Komponente C lassen sich biologisch abbaubare Polyester mit einer strukturellen Viskosität aufbauen. Die biologisch abbaubaren Polyester lassen sich leichter verarbeiten.

Unter einem Diisocyana werden im Rahmen der vorliegenden Erfindung vor allem lineare oder verzweigte Alkylendiisocyanate oder Cycloalkylendiisocyanate mit 2 bis 20 Kohlenstoffatomen, bevorzugt 3 bis 12 Kohlenstoffatomen, z.B. 1,6-Hexamethylendiisocyanat, Isophorondiisocyanat oder Methylen-bis(4-isocyanatocyclo-hexan), verstanden. Besonders bevorzugte aliphatische Diisocyanate sind Isophorondiisocyanat und insbesondere 1,6-Hexamethylendiisocyanat.

Unter polyfunktionellen Epoxiden wird insbesondere ein Epoxidgruppen-haltiges Copolymer auf Basis Styrol, Acrylsäureester und/oder Methacrylsäureester verstanden. Die Epoxidgruppen tragenden Einheiten sind vorzugsweise Glycidyl(meth)acrylate. Als vorteilhaft haben sich Copolymere mit einem Glycidylmethacrylat-Anteil von größer 20, besonders bevorzugt von größer 30 und insbesondere bevorzugt von größer 50 Gew.-% des Copolymers erwiesen. Das EpoxidÄquivalentgewicht (EEW) in diesen Polymeren beträgt vorzugsweise 150 bis 3000 und insbesondere bevorzugt 200 bis 500 g/Äquivalent. Das mittlere Molekulargewicht (Gewichtsmittel) Mw der Polymere beträgt vorzugsweise 2000 bis 25.000, insbesondere 3000 bis 8.000. Das mittlere Molekulargewicht (Zahlenmittel) Mₙ der Polymere beträgt vorzugsweise 400 bis 6.000, insbesondere 1000 bis 4.000. Die Polydispersität (Q) liegt im Allgemeinen zwischen 1.5 und 5. Epoxidgruppen-haltige Copolymere des obengenannten Typs werden beispielsweise von der BASF Resins B.V. unter der Marke Joncryl® ADR vertrieben. Als Kettenverlängerer besonders geeignet ist beispielsweise Joncryl® ADR 4368.

In der Regel ist es sinnvoll die vernetzenden (mindestens trifunktionellen) Verbindungen zu einem früheren Zeitpunkt der Polymerisation zuzugeben.

Die Polyester weisen in der Regel ein zahlenmittleres Molekulargewicht (Mn) im Bereich von 5000 bis 100000, insbesondere im Bereich von 10000 bis 75000 g/mol, bevorzugt im Bereich von 15000 bis 38000 g/mol, ein gewichtmittleres Molekulargewicht (Mw) von 30000 bis 300000, vorzugsweise 60000 bis 200000 g/mol und ein Mw/Mn-Verhältnis von 1 bis 6, vorzugsweise 2 bis 4 auf. Die Viskositätszahl liegt zwischen 50 und 450, vorzugsweise von 80 bis 250 g/mL (gemessen in o-Dichlorbenzol/Phenol (Gewichtsverhältnis 50/50)). Der Schmelzpunkt liegt im Bereich von 85 bis 150, bevorzugt im Bereich von 95 bis 140°C.

Die bevorzugten teilaromatischen Polyester sind charakterisiert durch ein Molekulargewicht (Mn) im Bereich von 1000 bis 100000, insbesondere im Bereich von 9000 bis 75000 g/mol, bevorzugt im Bereich von 10000 bis 50000 g/mol und einem Schmelzpunkt im Bereich von 60 bis 170, bevorzugt im Bereich von 80 bis 150°C.

Unter aliphatischen Polyestern werden Polyester aus aliphatischen Diolen und aliphatischen Dicarbonsäuren wie Polybutylensuccinat (PBS), Polybutylenadipat (PBA), Polybutylensuccinatadipat (PBSA), Polybutylensuccinatsebacat (PBSSe), Polybutylensebacat (PBSe) oder entsprechende Polyesteramide oder Polyesterurethane verstanden. Die aliphatischen Polyester werden beispielsweise von den Firmen Showa Highpolymers unter dem Namen Bionolle und von Mitsubishi unter dem Namen GSPIa vermarktet. Neuere Entwicklungen sind in der WO2010034711 beschrieben. Bevorzugte aliphatische Polyester sind Polybutylensuccinatsebacat (PBSSe) und insbesondere bevorzugt Polybutylensebacat (PBSe).

Die aliphatischen Polyester weisen in der Regel Viskositätszahlen nach DIN 53728 von 150 bis 320 cm³/g und vorzugsweise 150 bis 250 cm³/g auf.

Der MVR (Schmelzvolumenrate) nach EN ISO 1133 (190°C, 2,16 kg Gewicht) liegt im Allgemeinen bei 0,1 bis 70, bevorzugt bei 0,8 bis 70 und insbesondere bei 1 bis 60 cm³/10 min. Die Säurezahlen nach DIN EN 12634 liegen im Allgemeinen bei 0,01 bis 1,2 mg KOH/g, vorzugsweise bei 0,01 bis 1,0 mg KOH/g und insbesondere bevorzugt bei 0,01 bis 0,7 mg KOH/g.

Die Polyester können auch Mischungen aus aliphatisch-aromatischen Polyestern und rein aliphatischen Polyestern enthalten wie beispielsweise Mischungen aus PBAT und PBS.

Besonders eignen sich als Komponente ii Polyester der folgenden Zusammensetzung:
- 40 bis 100 mol%, bezogen auf die Gesamtmenge an Dicarbonsäure, mindestens einer aliphatischen C₄-C₁₈-Dicarbonsäure oder C₄-C₁₈-Dicarbonsäurederivats;
- 0 bis 60 mol%, bezogen auf die Gesamtmenge an Dicarbonsäure, Terephthalsäure oder Terephthalsäurederivats und
- 100 mol%, bezogen auf die Gesamtmenge an Dicarbonsäure, 1,4-Butandiol oder 1,3-Propandiol.

Die erfindungsgemäßen Polymermischungen können weitere Zusatzstoffe enthalten.

In einer bevorzugten Ausführungsform werden der erfindungsgemäßen Polymermischung 0,01 bis 3,0 Gew.-%, vorzugsweise 0,05 bis 2,0 Gew.-% und insbesondere bevorzugt 0,1 bis 0,5 Gew.-%, bezogen auf die Komponenten i und ii, eines Naturwachses zugegeben. Dadurch kann die Wasserdampfbarriere der Barrierefolien (Einschicht- oder Mehrschichtfolie enthaltend diese Polymermischung) nochmals deutlich verbessert werden. Beim Einsatz höherer Mengen Naturwachs sinkt die Barrierewirkung wieder ab.

Unter Naturwachs werden tierische und pflanzliche Wachse wie Bienenwachs, Carnaubawachs, Candelillawachs, Japanwachs, Espartograswachs, Korkwachs, Guarumawachs, Reiskeimölwachs, Zuckerrohrwachs, Ouricurywachs, Schellackwachs, Walrat, Lanolin (Wollwachs), Bürzelfett, Sasolwachse, Jojobawachse, oder auch Montanwachs verstanden, das aus Braunkohle gewonnen werden kann und damit ebenfalls pflanzlichen Ursprungs ist. Bevorzugt sind Carnaubawachs, Candelillawachs, Montanwachs und insbesondere Bienenwachs.

Weiterhin können der Polymermischung 0,5 bis 50 Gew.-%, bezogen auf die Komponenten i und ii, eines Füllstoffs ausgewählt aus der Gruppe bestehend aus Calciumcarbonat, Talk, Kaolin, Ton, Glimmer oder thermoplastifizierte oder nicht thermoplastifizierte Stärke zugesetzt werden. Durch den Zusatz der besonders bevorzugten anorganischen Füllstoffe Calciumcarbonat, Talk, Kaolin, Ton, Glimmer lässt sich die Wasserdampfbarriere der Polymermischungen weiter verbessern. Insgesamt können den Polyestermischungen beispielsweise Füllstoffe in 5 bis 35 Gew.-%, bezogen auf das Gesamtgewicht der Polymermischung, zugesetzt werden.

Calciumcarbonat kann beispielsweise in 5 bis 25 Gew.-%, bevorzugt 10 bis 20 Gew.-%, bezogen auf das Gesamtgewicht der Polymermischung, eingesetzt werden. Unter anderem hat sich das Calciumcarbonat der Fa. Omya als geeignet erwiesen. Das Calciumcarbonat weist in der Regel eine mittlere Teilchengröße von 0,5 bis 10 Mikrometern bevorzugt 1 - 5, besonders bevorzugt 1 - 2,5 Mikrometern auf.

Talk kann beispielsweise in 3 bis 15 Gew.-%, bevorzugt 5 bis 10 Gew.-%, bezogen auf das Gesamtgewicht der Polymermischung, eingesetzt werden. Unter anderem hat sich der Talk der Fa. Mondo Minerals als geeignet erwiesen. Der Talk weist in der Regel eine mittlere Teilchengröße von 0,5 - 10, bevorzugt 1 - 8, besonders bevorzugt 1 - 3 Mikrometern auf.

Durch den Zusatz von thermoplastifizierter oder nicht thermoplastifizierter Stärke aber auch Calciumcarbonat und Talk lässt sich die Weiterreissfestigkeit der Folien weiter verbessern. Unter Stärke wird auch Amylose verstanden; thermoplastifiziert bedeutet mit Weichmachern wie beispielsweise Glycerin, Sorbit oder Wasser thermoplastifiziert (siehe EP-A 539 541, EP-A 575 349, EP-A 652 910) oder auch oberflächenmodifiziert (siehe EP-A 937120, EP-A 947559, EP-A 965615). Erfindungsgemäße Polymermischungen, die 10 bis 35 Gew.-%, bezogen auf das Gesamtgewicht der Polymermischung, an thermoplastischer oder nicht thermoplastischer Stärke enthalten, weisen sowohl eine gute Abbaubarkeit im Boden als auch gute mechanische Eigenschaften wie insbesondere eine hohe Weiterreißfestigkeit auf. Diese stärkehaltigen Mischungen sind daher eine interessante Alternative zu den obengenannten Füllstoff-haltigen (Calcium- und/oder Talk-haltigen) gegebenenfalls auch in Kombination mit den Füllstoff-haltigen Polymermischungen.

Die Polyestermischung kann demnach noch weitere Inhaltsstoffe enthalten. Die Polyestermischung einschließlich aller weiteren Inhaltsstoffe wird im Folgenden Polymermischung genannt.

Weiterhin kann die erfindungsgemäße Polyesterfolie weitere dem Fachmann bekannte, Additive enthalten. Beispielsweise die in der Kunststofftechnik üblichen Zusatzstoffe wie Stabilisatoren; Nukleierungsmittel; Gleit- und Trennmittel wie Stearate (insbesondere Calziumstearat); Weichmacher (Plastifizierer) wie beispielsweise Zitronensäureester (insbesondere Acetyltributylcitrat), Glycerinsäureester wie Triacetylglycerin oder Ethylenglykolderivate, Tenside wie Polysorbate, Palmitate oder Laurate; Wachse wie beispielsweise Erucasäureamid, Stearinsäureamid oder Behenamid, Bienenwachs oder Bienenwachsester; Antistatikum, UV-Absorber; UV-Stabilisatoren; Antifog-Mittel oder Farbstoffe. Die Additive werden üblicherweise in Konzentrationen von 0 bis 2 Gew.-%, insbesondere 0,1 bis 2 Gew.-% bezogen auf die erfindungsgemäße Polyesterfolie eingesetzt. Weichmacher können in 0,1 bis 10 Gew.-% in der erfindungsgemäßen Polyesterfolie enthalten sein.

Einschichtfolien mit einer Dicke zwischen 5 und 100 µm zeigen mit der erfindungsgemäßen Polyestermischung Wasserdampfpermeabilitäten gemessen nach ASTM-F1249 (vom 1. August 2011; 23 °C, 85% r.h) von 1,0 bis 30 g 100 µm/m²d und vorzugsweise 2,0 bis 10 g 100 µm/m²d.

In einer bevorzugten Ausführungsform können die Einschichtfolien neben den erfindungsgemäßen Polyestermischungen noch weitere Polymere ausgewählt aus der Gruppe bestehend aus: Polymilchsäure (PLA), Polycaprolacton (PCL) und Polyhydroxyalkanoat enthalten.

Bevorzugt sind Mehrschichtfolien, wobei die Mittelschicht eine Barrierefolie darstellt und eine erfindungsgemäße Polymermischung nach einem der Ansprüche 1 bis 4 enthält.

Der Aufbau der Mehrschichtfolie kann sowohl symmetrisch als auch unsymmetrisch sein, jedoch ist die Barrierefolie nicht als äußerste Schicht zu verstehen. Die Schichtdicken der einzelnen Bestandteile liegen im Allgemeinen zwischen 0,01 und 100 µm, bevorzugt jedoch zwischen 0,1 und 50 µm. Die Anzahl sich wiederholender Schichten ist unbegrenzt.

Besonders bevorzugt ist eine biologisch abbaubare Mehrschichtfolie umfassend die Schichtfolge (A)(B) oder (B)(A)(B), worin die Schichten A und B die folgende Zusammensetzung haben:
A) Schicht A enthält eine Polymermischung der Zusammensetzung:
   ai) 55 bis 90 Gew.-%, bezogen auf das Gesamtgewicht der Komponenten ai und aii, einer Polyglykolsäure (PGA) und
   aii) 10 bis 45% Gew.-%, bezogen auf das Gesamtgewicht der Komponenten ai und aii, mindestens eines biologisch abbaubaren Polyesters gebildet aus aliphatischen oder aliphatischen und aromatischen Dicarbonsäuren und aliphatischen Diolen, wobei die Komponente ii gebildet ist aus:
      - 40 bis 100 mol%, bezogen auf die Gesamtmenge an Dicarbonsäure, mindestens einer aliphatischen C₄-C₁₈-Dicarbonsäure oder Dicarbonsäurederivats,
      - 0-60 mol%, bezogen auf die Gesamtmenge an Dicarbonsäure, Terephtalatsäure oder eines Terephtalatsäurederivats und
      - 100 mol%, bezogen auf die Gesamtmenge von Dicarbonsäure, 1,4-Butendiol oder 1,3-Propandiol.
B) Schicht B enthält:
   bi) 0 bis 70 Gew.-%, vorzugsweise 5 bis 50 Gew.-%, bezogen auf das Gesamtgewicht der Komponenten bi und bii, mindestens eines Polyesters ausgewählt aus der Gruppe bestehend aus Polymilchsäure, Polyhydroxyalkanoat und Polypropylencarbonat und
   bii) 30 bis 100% Gew.-%, vorzugsweise 5 bis 50 Gew.-%, bezogen auf das Gesamtgewicht der Komponenten bi und bii, mindestens eines biologisch abbaubaren Polyesters gebildet aus aliphatischen oder aliphatischen und aromatischen Dicarbonsäuren und aliphatischen Diolen.

Neben der erfindungsgemäßen Polymermischung können die Mehrschichtfolien zudem noch in weiteren Schichten Polymere ausgewählt aus der Gruppe bestehend aus: Polymilchsäure (PLA), Polycaprolacton (PCL) und Polyhydroxyalkanoat, thermoplastifizierter und nicht thermoplastifizierter Stärke oder Polyester, hergestellt aus aliphatischen und aliphatischen oder aromatischen Dicarbonsäuren und einer aliphatischen Dihydroxyverbindung enthalten.

PLA mit dem folgenden Eigenschaftsprofil wird bevorzugt eingesetzt:
- einer Schmelzvolumenrate (MVR) nach EN ISO 1133 (190°C, 2,16 kg Gewicht) von 0.5 bis 30 insbesondere 2 bis 40 cm³/10min
- einem Schmelzpunkt unter 240° C;
- einem Glaspunkt (Tg) größer 55°C
- einem Wassergehalt von kleiner 1000 ppm
- einem Monomeren-Restgehalt (Lactid) von kleiner 0.3%
- einem Molekulargewicht von größer 80 000 Dalton.

Bevorzugte Polymilchsäuren sind beispielsweise Ingeo® 8052D, 6201D, 6202D, 6251D, 3051D und insbesondere Ingeo® 4020D, 4032D oder 4043D (Polymilchsäure der Fa. NatureWorks).

Durch den Zusatz von PLA im beanspruchten Mengenbereich können die Eigenschaften der Polyesterfolie (Durchstoßfestigkeit und Weiterreißfestigkeit) hergestellt aus der Polymermischung nochmal deutlich verbessert werden. Es können auch Mischungen von leichtfließendem und höher viskosem PLA eingesetzt werden.

Unter Polyhydroxyalkanoaten werden in erster Linie Poly-4-hydroxybutyrate und Poly-3-hydroxybutyrate und Copolyester der vorgenannten Poly-Hydroxybutyrate mit 3-Hydroxyvalerat, 3-Hydroxyhexanoat und/oder 3-Hydroxyoctanoat verstanden. Poly-3-hydroxybutyrate werden beispielsweise von der Fa. PHB Industrial unter dem Markennamen Biocycle® und von der Fa. Tianan unter dem Namen Enmat® vertrieben.
Poly-3-hydroxybutyrate-co-4-hydroxybutyrate sind insbesondere von der Fa. Metabolix bekannt. Sie werden unter dem Handelsnamen Mirel® vertrieben.
Poly-3-hydroxybutyrate-co-3-hydroxyhexanoate sind von der Fa. P&G oder Kaneka bekannt. Poly-3-hydroxybutyrate-co-3-hydroxyhexanoate weisen in der Regel einen 3-Hydroxyhexanoatanteil von 1 bis 20 und vorzugsweise von 3 bis 15 mol% bezogen auf das Polyhydroxyalkanoat auf. Die Polyhydroxyalkanoate weisen in der Regel ein Molekulargewicht Mw von 100.000 bis 1.000.000 und vorzugsweise von 300.000 bis 600.000 auf.

Das Polypropylencarbonat kann analog beispielsweise WO 2003/029325, WO 2006/061237 oder WO 2007 2007/127039 hergestellt werden.

Als Polyester bii können die gleichen Polyester wie die zuvor beschriebenen aliphatischen oder aliphatisch-aromatischen Polyester aii eingesetzt werden, es können jedoch auch unterschiedliche Polyester aii und bii zum Einsatz gelangen.

Auch können den Polymermischungen, insbesondere den Polymilchsäurehaltigen Mischungen 0 bis 1 Gew.-%, bevorzugt 0,01 bis 0,8 Gew.-%, besonders bevorzugt 0,05 bis 0,5 Gew.-%, bezogen auf das Gesamtgewicht der Komponenten i bis ii, eines Epoxidgruppen-haltigen Copolymers auf Basis Styrol, Acrylsäureester und/oder Methacrylsäureester zugesetzt werden. Die Epoxidgruppen tragenden Einheiten sind vorzugsweise Glycidyl(meth)acrylate. Besonders geeignet ist das bereits zuvor beschriebene Joncryl® ADR 4368.

Die Herstellung der erfindungsgemäßen Einschicht- oder Mehrschichtfolien kann mittels der üblichen Herstellverfahren wie Laminier- oder Extrusionsverfahren erfolgen wie beispielsweise in J. Nentwig "Kunststoff-Folien", 2.Aufl., Hanser Verlag, München (2006), Seiten 39 bis 63 beschrieben. Für die Mehrschichtfolien hat sich die Herstellung mittels Coextrusion als besonders geeignet erwiesen wie beispielsweise in J. Nentwig "Kunststoff-Folien", 2.Aufl., Hanser Verlag, München (2006), Seiten 58 bis 60 beschrieben.

Diese Folien können u. a. für Verpackung von Lebensmitteln verwendet werden, um eine längere Haltbarkeit dieser zu gewährleisten. Beispielsweise sind hier zu nennen, Fleisch-, Fisch-, Käse-, Schokoladenverpackungen, aber auch das Verpacken von Kaffee, Tee und Gewürzen. Dabei können die Folien beispielsweise als Umverpackung oder als Deckelfolie verwendet werden.

Die Wasserdampfbarriere wurde nach der ASTM F-1249 Norm in der aktualisierten Fassung vom 1. August 2011 gemessen.
Komponente i:
   i-1: Polyglykolsäure Kuredux® 100E35 der Fa. Kureha.
Komponente ii:
   ii-1: Polybutylenterephthalat - coadipat, ecoflex® C1201 der Fa. BASF SE.
Komponente iii:
   iii-1: Poly-3-hydroxybutyrat-co-hexanoate, Aonilex® ADR 4368 CS der Fa. Kaneka.

### I. Compoundierung der Polymermischung

### Allgemeine Vorschrift (Beispiel 1):

Die Compoundierung wurde an einem Extruder bei einer Temperatur von 250 °C durchgeführt. Es werden Mischungen aus den Komponenten i-1 und ii-2 hergestellt. Um eine gute Vermischung der Komponenten zu gewährleisten wurde bei einer Drehzahl von 80 Umdrehungen/Minute für drei Minuten gemischt. Nach dieser Zeit wurde die Schmelze abgelassen und der Strang zu kleineren Stücken verarbeitet.

### Vergleichsbeispiel 1 a:

Hier wurde wie in Beispiel 1 beschrieben 100 Gew.-% der Komponente i-1 eingesetzt.

### Beispiel 1b:

Hier wurde wie in Beispiel 1 beschrieben 80 Gew.-% der Komponente i-1 und 20 Gew.-% der Komponente ii-1 eingesetzt.

### Beispiel 1c:

Hier wurde wie in Beispiel 1 beschrieben 60 Gew.-% der Komponente i-1 und 40 Gew.-% der Komponente ii-1 eingesetzt.

### Vergleichsbeispiel 1d:

Hier wurde wie in Beispiel 1 beschrieben 50 Gew.-% der Komponente i-1 und 50 Gew.-% der Komponente ii-1 eingesetzt.

### Vergleichsbeispiel 1e:

Hier wurde wie in Beispiel 1 beschrieben 40 Gew.-% der Komponente i-1 und 60 Gew.-% der Komponente ii-1 eingesetzt.

### Vergleichsbeispiel 1f:

Hier wurde wie in Beispiel 1 beschrieben 20 Gew.-% der Komponente i-1 und 80 Gew.-% der Komponente ii-1 eingesetzt.

### Vergleichsbeispiel 1g:

Hier wurde wie in Beispiel 1 beschrieben 100 Gew.-% der Komponente ii-1 eingesetzt.

### Allgemeine Vorschrift (Vergleichsbeispiel 2):

Die Compoundierung wurde an einem Extruder bei einer Temperatur von 170 °C durchgeführt. Es werden Mischungen aus den Komponenten iii-1 und ii-2 hergestellt. Um eine gute Vermischung der Komponenten zu gewährleisten wurde bei einer Drehzahl von 80 Umdrehungen/Minute für drei Minuten gemischt. Nach dieser Zeit wurde die Schmelze abgelassen und der Strang zu kleineren Stücken verarbeitet.

### Vergleichsbeispiel 2a:

Hier wurde wie in Beispiel 1 beschrieben 100 Gew.-% der Komponente iii-1 eingesetzt.

### Vergleichsbeispiel 2b:

Hier wurde wie in Beispiel 1 beschrieben 80 Gew.-% der Komponente iii-1 und 20 Gew.-% der Komponente ii-1 eingesetzt.

### Vergleichsbeispiel 2c:

Hier wurde wie in Beispiel 1 beschrieben 60 Gew.-% der Komponente iii-1 und 40 Gew.-% der Komponente ii-1 eingesetzt.

### Vergleichsbeispiel 2d:

Hier wurde wie in Beispiel 1 beschrieben 50 Gew.-% der Komponente iii-1 und 50 Gew.-% der Komponente ii-1 eingesetzt.

### Vergleichsbeispiel 2e:

Hier wurde wie in Beispiel 1 beschrieben 40 Gew.-% der Komponente iii-1 und 60 Gew.-% der Komponente ii-1 eingesetzt.

### Vergleichsbeispiel 2f:

Hier wurde wie in Beispiel 1 beschrieben 20 Gew.-% der Komponente iii-1 und 80 Gew.-% der Komponente ii-1 eingesetzt.

### Vergleichsbeispiel 2g:

Hier wurde wie in Beispiel 1 beschrieben 100 Gew.-% der Komponente ii-1 eingesetzt.

### II. Herstellung der Pressfolien

Polyestermischungen aus Beispiel 1 und 2 wurden zu Pressfolien (100 µm) an einer Heizpresse Hy 1086 der Firma IWK verpresst. Compounds mit Komponente i-1 wurden bei einer Temperatur von 265 °C, bzw. bei 180 °C für Komponente iii-1 verarbeitet. Der Aufbau zum Verpressen wurde wie folgt verwendet. Zwischen die Pressbacken kam von unten nach oben eine Stahlplatte, eine Teflonfolie, ein Stahlrahmen und in diesem der Kunststoff, eine Teflonfolie und abschließend abermals eine Stahlplatte. Das Granulat wurde 10 Minuten aufgeschmolzen, anschließend bei 50 bar 1 Minute, bei 100 bar 1 Minute und bei 200 bar 2 Minuten inkubiert. Es wurde unter Druck abgekühlt und die Folie aus der Form herausgetrennt.

### III. Bestimmung der Wasserdampf- Barriere

Die Wasserdampftransmission wurde an einem Permatran 3/33 der Firma Mocon entsprechend ASTM F-1249 bei 23°C gegen einen Gradienten von 85% r.h. gemessen. Materialstärken zur Berechnung der Permeabilität der Probekörper wurden entsprechend DIN 53370 durch mechanisches Abtasten bestimmt. Die Permeabilität wurde in g 100 µm/m²d angegeben. Um eine möglichst gute Vergleichbarkeit mit anderen Materialien zu erreichen, wurde der Messwert auf eine Schichtdicke von 100 µm bezogen. Die Permeabilität von Sauerstoff wurde ebenfalls bei 23 °C, jedoch 0% r.h. gemessen (O₂ Gradient 1 bar). Die Permeabilität von Sauerstoff wird mit der Einheit cm³ 100 µm/m²d bar bestimmt.

### IV. Bestimmung der Hydrolysestabilität

In einem Klimaschrank WK111¹⁸⁰ der Firma Weiss wurden Folienproben bei 50°C und 98% rel. Feuchte gelagert. In bestimmten Zeitintervallen wird die Folie begutachtet, ob die Folie noch völlig intakt oder durch Hydrolyse zersetzt wurde. Die Anzahl an Tage gibt an, wie lange die Folie im Klimaschrank intakt vorlag.

| | V-1a | Bsp-1b | Bsp-1c | V-1d | V-1e | V-1f | V-1g |
|---|---|---|---|---|---|---|---|
| Komponente i-1 (Gew.-%) | 100 | 80 | 60 | 50 | 40 | 20 | 0 |
| Komponente ii-1 (Gew.-%) | 0 | 20 | 40 | 50 | 60 | 80 | 100 |
| Compoundiertemperatur (°C) | 250 | 250 | 250 | 250 | 250 | 250 | 250 |
| Verarbeitu ngstem peratu r (°C) | 265 | 265 | 265 | 265 | 265 | 265 | 265 |
| Permeabilität H₂O(g) (g 100 µm/m²d) 23 °C, 85% r.h. | 2,29 | 2,39 | 2,49 | 26,70 | 55,00 | 53,80 | 82,00 |
| Permeabilität O₂ (cm³ 100 µm/m²d bar) 23 °C 0% r.h. | 0,38 | | 1,70 | 286,20 | | | 624,24 |
| Hydrolysestabilität | 4 | 8 | 8 | | >42 | >42 | >42 |

| | V-2a | V-2b | V-2c | V-2d | V-2e | V-2f | V-2g |
|---|---|---|---|---|---|---|---|
| Komponente iii-1 (Gew.-%) | 100 | 80 | 60 | 50 | 40 | 20 | 0 |
| Komponente ii-1 (Gew.-%) | 0 | 20 | 40 | 50 | 60 | 80 | 100 |
| Compoundiertemperatur (°C) | 170 | 170 | 170 | 170 | 170 | 170 | 170 |
| Verarbeitungstemperatur (°C) | 180 | 180 | 180 | 180 | 180 | 180 | 180 |
| Permeabilität H₂O_{(g)} (g 100 µm/m²d) 23 °C, 85% r.h. | 4,00 | 12,60 | 19,00 | 20,60 | 30,35 | 43,50 | 82,00 |

## Patentansprüche

1. Biologisch abbaubare Polyestermischung enthaltend:
i) 55 bis 90 Gew.-%, bezogen auf die Komponenten i und ii, einer Polyglykolsäure (PGA) und
ii) 10 bis 45% Gew.-%, bezogen auf die Komponenten i und ii, eines biologisch abbaubaren Polyesters gebildet aus aliphatischen oder aliphatischen und aromatischen Dicarbonsäuren und aliphatischen Diolen, wobei
die Komponente ii gebildet ist aus:
• 40 bis 100 mol%, bezogen auf die Gesamtmenge an Dicarbonsäure, mindestens einer aliphatischen C₄-C₁₈-Dicarbonsäure oder C₄-C₁₈-Dicarbonsäurederivats;
• 0 bis 60 mol%, bezogen auf die Gesamtmenge an Dicarbonsäure, Terephthalsäure oder Terephthalsäurederivats und
• 100 mol%, bezogen auf die Gesamtmenge an Dicarbonsäure, 1,4-butandiol oder 1,3-Propandiol.

2. Polyestermischung nach Anspruch 1, enthaltend 0,05 bis 2,0 Gew.-%, bezogen auf die Komponenten i und ii, eines Naturwachses.

3. Polyestermischung nach Anspruch 1, enthaltend 0,5 bis 50 Gew.-%, bezogen auf die Komponenten i und ii, eines Füllstoffs ausgewählt aus der Gruppe bestehend aus Calciumcarbonat, Talk, Kaolin, Ton, Glimmer.

4. Eine biologisch abbaubare Folie enthaltend eine Polymermischung gemäß Anspruch 1 bis 3.

5. Eine biologisch abbaubare Mehrschichtfolie umfassend die Schichtfolge (A)(B) oder (B)(A)(B), worin die Schichten A und B die folgende Zusammensetzung haben;
A) Schicht A enthält eine Polymermischung gemäß den Ansprüchen 1 bis 3;
B) Schicht B enthält:
bi) 0 bis 70 Gew.-%, bezogen auf das Gesamtgewicht der Komponenten bi und bii, mindestens eines Polyesters ausgewählt aus der Gruppe bestehend aus Polymilchsäure, Polyhydroxyalkanoat und Polypropylencarbonat und
bii) 30 bis 100% Gew.-%, bezogen auf das Gesamtgewicht der Komponenten bi und bii mindestens eines biologisch abbaubaren Polyesters gebildet aus aliphatischen oder aliphatischen und aromatischen Dicarbonsäuren und aliphatischen Diolen.

6. Verwendung der Folien gemäß den Ansprüchen 4 und 5 zur Verpackung von Lebensmitteln.

## Claims

1. A biodegradable polymer mixture comprising:
i) from 55 to 90% by weight, based on components i and ii, of a polyglycolic acid (PGA) and
ii) from 10 to 45% by weight, based on components i and ii, of a biodegradable polyester formed from aliphatic or from aliphatic and aromatic dicarboxylic acids and from aliphatic diols, where
component ii has been formed from
• from 40 to 100 mol%, based on the total amount of dicarboxylic acid, of at least one aliphatic C₄-C₁₈-dicarboxylic acid or C₄-C₁₈-dicarboxylic acid derivative;
• from 0 to 60 mol%, based on the total amount of dicarboxylic acid, of terephthalic acid or terephthalic acid derivative, and
• 100 mol%, based on the total amount of dicarboxylic acid, of 1,4-butanediol or 1,3-propanediol.

2. The polyester mixture according to claim 1, comprising from 0.05 to 2.0% by weight, based on components i and ii, of a natural wax.

3. The polyester mixture according to claim 1, comprising from 0.5 to 50% by weight, based on components i and ii, of a filler selected from the group consisting of calcium carbonate, talc, kaolin, clay, mica.

4. A biodegradable foil comprising a polymer mixture according to any of claims 1 to 3.

5. A biodegradable multilayer foil comprising the layer sequence (A) (B) or (B) (A) (B), in which the composition of the layers A and B is as follows:
A) layer A comprises a polymer mixture according to claims 1 to 3;
B) layer B comprises:
bi) from 0 to 70% by weight, based on the total weight of components bi and bii, of at least one polymer selected from the group consisting of polylactic acid, polyhydroxyalkanoate, and polypropylene carbonate, and
bii) from 30 to 100% by weight, based on the total weight of the components bi and bii, of at least one biodegradable polymer formed from aliphatic or from aliphatic and aromatic dicarboxylic acids and from aliphatic diols.

6. The use of the foils according to claims 4 and 5 for food-or-drink packaging.

## Revendications

1. Mélange de polyester biodégradable, contenant :
i) 55 à 90 % en poids, par rapport aux composants i et ii, d'un acide polyglycolique (PGA) et
ii) 10 à 45 % en poids, par rapport aux composants i et ii, d'un polyester biodégradable formé à partir d'acides dicarboxyliques aliphatiques ou aliphatiques et aromatiques et de diols aliphatiques,
le composant ii étant formé à partir de :
- 40 à 100 % en moles, par rapport à la quantité totale d'acide dicarboxylique, d'au moins un acide dicarboxylique en C₄-C₁₈ aliphatique ou d'un dérivé d'acide dicarboxylique en C₄-C₁₈,
- 0 à 60 % en moles, par rapport à la quantité totale d'acide dicarboxylique, d'acide téréphtalique ou d'un dérivé d'acide téréphtalique, et
- 100 % en moles, par rapport à la quantité totale d'acide dicarboxylique, de 1,4-butanediol ou de 1,3-propanediol.

2. Mélange de polyester selon la revendication 1, contenant 0,05 à 2,0 % en poids, par rapport aux composants i et ii, d'une cire naturelle.

3. Mélange de polyester selon la revendication 1, contenant 0,5 à 50 % en poids, par rapport aux composants i et ii, d'une charge choisie dans le groupe constitué par le carbonate de calcium, le talc, le kaolin, l'argile, le mica.

4. Film biodégradable contenant un mélange de polymères selon les revendications 1 à 3.

5. Film multicouche biodégradable comprenant la succession de couches (A) (B) ou (B) (A) (B), les couches A et B ayant la composition suivants :
A) la couche A contient un mélange de polymères selon les revendications 1 à 3 ;
B) la couche B contient :
bi) 0 à 70 % en poids, par rapport au poids total des composants bi et bii, d'au moins un polyester choisi dans le groupe constitué par l'acide polylactique, le polyhydroxyalcanoate et le polycarbonate de propylène, et
bii) 30 à 100 % en poids, par rapport au poids total des composants bi et bii, d'au moins un polyester biodégradable formé à partir d'acides dicarboxyliques aliphatiques ou aliphatiques et aromatiques, et de diols aliphatiques.

6. Utilisation des films selon les revendications 4 et 5 pour l'emballage de produits alimentaires.
